# EUROPEAN PATENT APPLICATION

(11) **EP 1 517 384 A1**
(43) Date of publication of application: **23.03.2005**
(21) Application number: 03761756.0
(22) Date of filing: 30.01.2003
(51) Int. Cl.: H01M 2/10, B65D 75/36, B65D 73/00

(54) **BATTERY PACKAGE AND METHOD FOR MEASURING CHARACTERISTICS OF BATTERY CONTAINED IN BATTERY PACKAGE**

(30) Priority: 26.06.2002 JP 2002185766
(71) Applicant: MATSUSHITA ELECTRIC INDUSTRIAL CO., LTD., Kadoma-shi, Osaka 571-8501 (JP)
(72) Inventor: MIKURIYA, Hitoshi, Chigasaki-shi, Kanagawa 253-0035 (JP); AOKI, Kenichi, Chigasaki-shi, Kanagawa 253-0012 (JP); WATANABE, Kiyoto, Chigasaki-shi, Kanagawa 253-0086 (JP)
(74) Representative: Patentanwälte Leinweber & Zimmermann
(86) International application number: PCT/JP2003/000899
(87) International publication number: WO 2004/004028

(57) **Abstract**

The battery package of the present invention has at least one battery and a battery holding part, and this battery holding part has openings or opening formation portions provided at the positions corresponding to the positions of terminals of positive and negative electrodes. According to the present invention, characteristics of the batteries held in the battery package can be measured without opening the battery package, and hence the batteries can be supplied for consumers in the better state. Furthermore, waste of resources can be avoided, resulting in contribution to protection of environment.

## Description

### Technical Field

The present invention relates to a battery package and a method for the measurement of characteristics of the batteries held in the package. Particularly, the present invention is suitably applied to a blister package used as a commercial package which holds batteries for displaying and selling them.

### Background Art

A typical example of conventional blister packages of batteries is disclosed in JP-UM-A-1-150368. FIG. 4 is an oblique view of this package. In FIG. 4, the reference numeral 20 indicates a blister mount, 21 indicates an aperture for hooking, 22 indicates a blister cup comprising a rigid resin film, 23 indicates a battery, 24 indicates a flange which is a contact portion of the blister mount 20 and the blister cup 22, 25 indicates a positive electrode terminal of the battery 23, and 26 indicates a negative electrode terminal of the battery 23.

In the conventional blister package of batteries as mentioned above, the blister mount 20 and the flange 24 are completely bonded. Therefore, the package must be opened by tearing off the bonded portion for taking out the batteries held in the blister package.

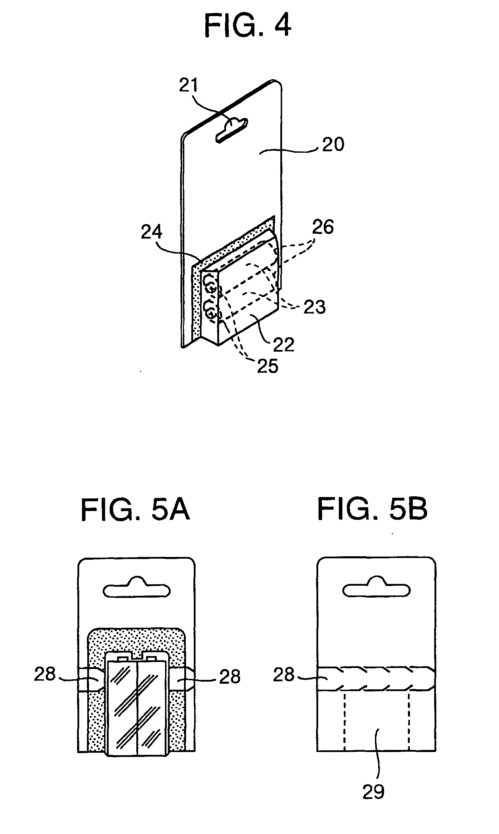

Furthermore, JP-A-10-250781 discloses a blister package having a portion 28 at which the blister mount having a perforation and the flange contact with each other, but they are not bonded (see the front side view shown in FIG. 5A and the back side view shown in FIG. 5B). In the case of this package, it is not needed to tear off the blister mount and the flange which contact with each other, but the portions 28 and 29 of the blister mount must be successively broken in order to open the package.

The state of the batteries held in the blister package must sometimes be known for quality assurance after shipment. For example, when voltage or inner resistance of the batteries is to be reexamined, in the case of the above blister package, the batteries are once taken out of the blister package and subjected to reexamination, and then they must be put in a fresh package. Therefore, fresh commercial packages are necessary, resulting in the problems such as waste of labor and resources.

Moreover, secondary batteries, particularly, nickel-hydrogen storage batteries and nickel-cadmium storage batteries, are preferably recharged after lapse of a certain period, and, thus, have the same problems as mentioned above.

### Disclosure of Invention

In order to solve the above problems, the present invention provides a battery package having at least one battery and a battery holding part where the battery holding part has openings or opening formation portions provided at the positions corresponding to the positions of positive and negative electrode terminals.

By providing the openings or opening formation portions, characteristics such as voltage and internal resistance of the batteries can be measured or charging and discharging of the batteries can be carried out through the openings from the outside.

### Brief Description of Drawings

FIG. 1A is an oblique view of the battery package of the present invention, FIG. 1B is a left side view of the package, and FIG. 1C is a right side view of the package.
FIG. 2 is an exploded oblique view of another battery package of the present invention.
FIG. 3A is a front view of another battery package of the present invention, and FIG. 3B is a backside view of the package.
FIG. 4 is an oblique view of a conventional blister package.
FIG. 5A is a front view of another conventional blister package, and FIG. 5B is a backside view of the blister package.

### Best Mode for Carrying Out the Invention

Usually, batteries are packaged in the form of blister package for selling them under hanging and in the form of shrink package for selling them under stacking. The present invention can be applied irrespective of the packaging form such as blister package or shrink package. However, for making efficient use of resources, the present invention is suitably usable for blister packaging which consumes a larger number of materials for packaging.

Examples of application of the present invention to blister packaging will be explained below.

The blister package includes a blister cup and a blister mount.

The blister cup has a battery holding part formed in conformity with the shape of batteries to be held and a flange part formed at the circumference of the battery holding part, and has openings or opening formation portions provided at the positions corresponding to the positions of positive and negative electrode terminals of the batteries held therein.

Materials of the blister cup are not particularly limited, and there may be used thermoplastic resins such as polyvinyl chloride, polyethylene, polypropylene, polyester and polyethylene terephthalate in the form of a single layer sheet or a laminate sheet thereof. The resins are preferably transparent so that the batteries held in the cup or descriptions or photographs printed on the mount can be seen through the cup.

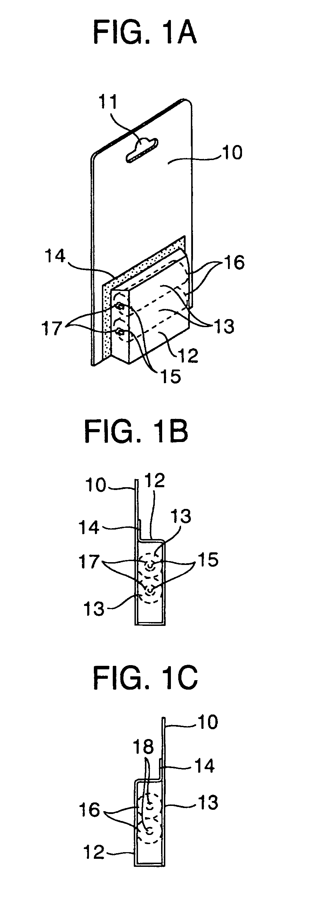

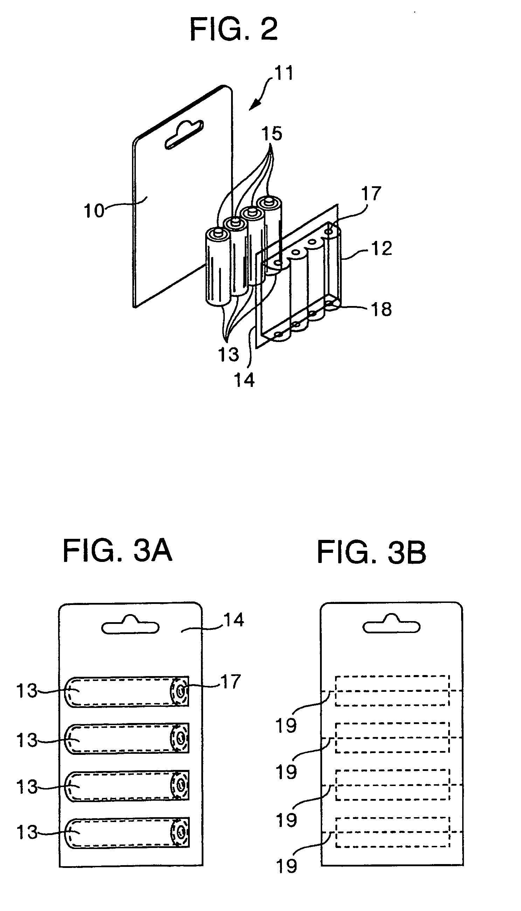

The shape of the blister cup is also not particularly limited so long as it is suitable for holding the battery. For example, the shape may be such that the cup can hold a plurality of batteries (FIG. 1) or one by one separately (FIG. 3).
Furthermore, when the blister cup has a shape of being able to hold a plurality of batteries, it may be provided with dents, the number of which corresponds to the number of batteries to be held (FIG. 2). The number of batteries is not limited, and can be optionally selected depending on size and weight of the batteries.

Moreover, the shape of the blister cup may be such that cylindrical batteries or rectangular batteries are arranged in lateral directions with respect to the blister mount (FIG. 1 and FIG. 3) or they are arranged in vertical directions with respect to the blister mount (FIG. 2). In the case of coin type batteries or button type batteries, they are arranged in such a state as one of the positive and negative electrode terminals contacting with the blister mount.

Vacuum forming method, pressure forming method, etc. can be employed for the formation of the blister cup.

The positions of the openings to be formed are those which correspond to the positive and negative electrode terminals of the batteries. In case one of the terminals contacts with the blister mount as in the case of button type batteries or coin type batteries, the openings are formed at the blister mount and the top surface of the blister cup. In the case of cylindrical batteries or rectangular batteries, when the batteries are laterally arranged, the openings are formed at the left and right side faces (FIG. 1 and FIG. 3), and when the batteries are vertically arranged, the openings are formed at the upper and lower side faces (FIG. 2).

The method of forming the openings is not particularly limited, and they may be formed at the time of forming a thermoplastic sheet into the blister cup, or may be formed by means of melting or the like after forming the cup.

The shape of the openings is not particularly limited, and a circular or rectangular opening may be formed for every one terminal, or slit-like openings may be formed for a plurality of the terminals.

In the present invention, the openings may be present at the time of measurement of characteristics of the batteries or charging and discharging of the batteries, and hence they may be opening formation portions provided with cutting lines such as perforations.

The size of the openings is also not particularly limited, and may be such that terminals of measuring devices or charging and discharging devices can be inserted through the openings from the outside and can contact with the positive and negative electrode terminals. However, the size is preferably such that the batteries do not fall off from the blister cups. That is, the size of the openings is preferably shorter in diameter than that of the batteries in the case of cylindrical batteries because the batteries do not fall off from the blister cups, and furthermore the size of the openings is preferably shorter than thickness of the batteries in the case of rectangular batteries also because the batteries do not fall off from the blister cups. Moreover, the size is preferably such that the terminals of the batteries do not project from the openings. The size of the openings here means a diameter of the circle in the case of the opening being circular, and is the length of a short side of the rectangle in the case of the opening being rectangular.

However, when the opening is closed with a label as mentioned below, the upper limit of the size of the opening is not essential.

That is, the opening may be closed with a peelable label in order to prevent penetration of dusts and the like. The peelable label is, for example, one which includes a substrate and an adhesive layer.

The adhesive layer is preferably a re-peelable type adhesive layer which makes it possible to peel and stick the label a plurality of times, and, for example, there may be used an adhesive obtained by adding a plasticizer, a tackifier, and a silicone compound to a natural rubber, a synthetic rubber or an acrylic resin. As the substrate, there may be used a synthetic resin substrate such as polyester, polypropylene or polyvinyl chloride and a paper substrate such as woodfree paper, art paper or coated paper.

The size of the label is not particularly limited so long as it can cover the opening. The shape is also not limited, and, for example, the label may have a tab as an auxiliary means for peeling. The label may be one on which the dates of inspection of battery characteristics or the dates of charging and discharging the batteries can be written or marked.

The flange may be provided at the total periphery of the blister cup (FIG. 2 and FIG. 3) or at the three sides of the periphery (FIG. 1), and the shape of the flange is not particularly limited. For example, a tab may be provided at the flange part as an auxiliary means for peeling.

The material of the blister mount is also not particularly limited, and generally a cardboard such as a coated cardboard is used, but there may also be used plastics such as biaxially stretched polyester film, biaxially stretched polyamide film or biaxially stretched polypropylene film. When the blister cup and the blister mount are both made of plastics, they can be disposed of without separating them from each other.

The blister mount may be provided with a hanging portion for hanging it from a bar for commercial display. The shape of the hanging portion is also not particularly limited, and may be an aperture or a notch.

A cutting line such as a perforation may be formed at the blister mount as shown in FIG. 5 for easy opening of the blister package. The position and shape of the cutting line is not particularly limited so long as the blister package can be easily opened. For example, when one battery is held in each of the separately formed holding portions, the battery may be taken out by pressing the surface of each holding portion, and in this case, for example, a cutting line such as a perforation 19 may be provided at the position of the blister mount which corresponds to the center of each holding portion in the longer direction of the blister mount (FIG. 3).

Descriptions and photographs of articles may be given to the blister mount.

The blister package is assembled, for example, in the following manner. First, a desired number of batteries are held in the blister cup, and the blister mount is superposed on the blister cup. Then, the flange of the blister cup is heated to melt the adhesive on the blister mount which contacts with the flange. The blister cup is fixed to the blister mount with the molten adhesive. The whole face of the flange may not be bonded to the mount with the adhesive, but the flange may be partially bonded to the mount for easy opening of the package as shown in FIG. 5. Simultaneously with the bonding, the batteries may be pressed down to the mount by a blister pack, and thus may be fixed by press bonding to the mount. In this case, the batteries can be fixed more strongly by carrying out vacuum press bonding.

The batteries to be held are not particularly limited, and may be primary batteries or secondary batteries. The shape of the batteries is also not particularly limited, and the present invention can be applied to any of cylindrical batteries, rectangular batteries, coin type batteries, button type batteries, etc.

The above explanation is made of the blister package as an example, but the present invention can also be applied to a battery package comprising a plurality of batteries held by a heat-shrinkable film, namely, so-called shrink package. Openings or opening formation portions are formed at the positions of the heat-shrinkable film which correspond to the positions of the positive and negative electrode terminals of the batteries held with the film. The method for the formation of the openings or opening formation portions is not particularly limited, and, for example, batteries are arranged between heat-shrinkable films, and except for the two sides of the heat-shrinkable films which are present at the positions corresponding to the positions of the positive and negative electrode terminals of the batteries, the other two sides of the heat-shrinkable films are seal cut, followed by heat-shrinking the films, whereby there can be formed a shrink package in which the positive and negative electrode terminals of the batteries are exposed, namely, in which openings are formed at the positions corresponding to the positions of the positive and negative electrode terminals of the batteries.

As the heat-shrinkable films, there may be used, for example, a polyethylene terephthalate film or a three-layer heat shrinkable film of polyethylene/polyethylene/polypropylene. A cutting line such as a perforation may be provided along the boundary between the batteries as is known.

The shrink package may be further packaged externally, but in this case the external package must also be similarly provided with openings or opening formation portions.

A preferred embodiment of the present invention will be explained in more detail below referring to FIG. 1.

FIG. 1A is an oblique view of the blister package of batteries which is an embodiment of the present invention. In FIG. 1A, the reference numeral 10 indicates a blister mount made of a cardboard, 11 indicates an aperture used for hooking, 12 indicates a blister cup comprising a rigid resin film made of PET, 13 indicates cylindrical nickel-hydrogen storage batteries, 14 indicates a flange at which the blister mount and the blister cup 12 contact with each other, 15 indicates a positive electrode terminal of the battery 13, 16 indicates a negative electrode terminal of the battery 13, and 17 indicates an opening formed in the resin film at the position corresponding to the position of the positive electrode terminal 15.

FIG. 1B is a left side view of the above blister package, and FIG. 1C is a right side view of the above blister package. In FIG. 1C, 18 indicates openings formed at the positions of the resin film which correspond to the positions of the negative electrode terminals 16.

The cylindrical nickel-hydrogen storage battery 13 has an AA size of 14.3 mm in diameter and 45 mm in height, and has a nominal capacity of 1700 mAh. The openings 17 and 18 of the resin film are circular and have a diameter of 3 mm which is smaller than the diameter of the battery 13, and the package has such a structure that the battery cannot be taken out unless the blister package is opened.

When the battery characteristics are measured, for example, voltage is measured, the measuring terminal of a voltmeter is inserted through the openings 17 and 18 and allowed to contact with the battery terminals of positive and negative electrodes to carry out the measurement. Thus, the voltage of batteries can be measured without opening the blister package of the batteries.

When the battery is a secondary battery, charge and discharge characteristics can also be measured. Of course, in this case, charging and discharging of the battery can be performed from the outside of the blister package of battery.

Since the characteristics of the battery can be measured from the outside of the blister package of battery as mentioned above, the state of battery can be easily controlled. In the case of secondary battery, especially, in the case of nickel-hydrogen storage battery or nickel-cadmium battery, auxiliary charging or discharging can be performed for keeping the battery in the better state.

### Industrial Applicability

As mentioned above, according to the present invention, characteristics of the batteries held in the battery package can be measured without opening the battery package, and hence the batteries can be supplied for consumers in the better state. Furthermore, waste of resources can be avoided, resulting in contribution to protection of environment.

## Claims

1. A battery package having at least one battery and a battery holding part, where the battery holding part has openings or opening formation portions provided at the positions corresponding to the positions of terminals of positive and negative electrodes of the battery.

2. A battery package according to claim 1, wherein the battery holding part comprises a blister mount and a blister cup.

3. A battery package according to claim 1, wherein the battery is a cylindrical battery and the size of the opening is smaller than the diameter of the battery.

4. A battery package according to claim 1, wherein the battery is a rectangular battery and the size of the opening is smaller than the thickness of the battery.

5. A method for measuring characteristics of battery held in the battery package of claim 1 which comprises contacting a terminal of a measuring device with terminals of positive and negative electrodes of the battery through the opening or opening formation portion from the outside.

6. A method for charging and discharging the battery held in the battery package of claim 1 which comprises contacting a terminal of a charging device or discharging device with terminals of positive and negative electrodes of the battery through the opening or opening formation portion from the outside.
